# EUROPÄISCHE PATENTSCHRIFT

(11) **EP 3 277 695 B1**
(45) Veröffentlichungstag und Bekanntmachung des Hinweises auf die Patenterteilung: **15.06.2022**
(21) Anmeldenummer: 16712320.7
(22) Anmeldetag: 24.03.2016
(51) Int. Cl.: C07F 5/02, C07F 5/06, C01B 6/04

(54) **VERFAHREN ZUR HERSTELLUNG VON METALLORGANYLEN**
METHOD FOR PRODUCING METAL ORGANYLS
PROCÉDÉ DE PRODUCTION DE COMPOSÉS ORGANOMÉTALLIQUES

(30) Priorität: 02.04.2015 DE 102015206046; 16.04.2015 DE 102015206897
(43) Veröffentlichungstag der Anmeldung: 07.02.2018
(73) Patentinhaber: Albemarle Germany GmbH, 65926 Frankfurt am Main (DE)
(72) Erfinder: WIETELMANN, Ulrich, 61381 Friedrichsdorf (DE); KURTH, Christopher, 63110 Rodgau (DE); SCHERER, Stefan, 64347 Griesheim (DE); RITTMEYER, Peter, 65843 Sulzbach/Taunus (DE); STOLL, Armin, 69493 Hirschberg an der Bergstraße (DE)
(74) Vertreter: Uexküll & Stolberg
(86) Internationale Anmeldenummer: PCT/EP2016/056533
(87) Internationale Veröffentlichungsnummer: WO 2016/156193

(56) Entgegenhaltungen:
- EP-A1- 0 003 564
- EP-A1- 0 685 425
- EP-A2- 0 015 541
- EP-B1- 0 014 983
- US-A- 3 706 809
- US-A- 3 998 941
- US-A- 4 327 071
- BOGDANOVIC B ET AL: "Diorganomagnesium Compounds from Magnesium, Hydrogen, and 1-Alkenes and Their Application in Synthesis", EUROPEAN JOURNAL OF INORGANIC CHEMISTRY, WILEY-VCH VERLAG, WEINHEIM, DE, Bd. 126, Nr. 6, 1. Juni 1993 (1993-06-01), Seiten 1371-1383, XP002006062, ISSN: 1434-1948, DOI: 10.1002/CBER.19931260616 [gefunden am 2006-01-26]

## Beschreibung

Gegenstand der vorliegenden Patentschrift ist ein Verfahren zur Herstellung von metallorganischen Verbindungen RMₙ (M = Alkalielement, R = Alkylrest).

Alkalimetallorganyle sind z.T. seit über 100 Jahren bekannt, aber nur die gut löslichen und thermisch stabilen Alkylverbindungen des Lithiums RLi konnten eine breite präparative und industriell bedeutende Nutzung erringen. Die erste Herstellung lithiumorganischer Verbindungen durch W. Schlenk erfolgte durch Spaltung quecksilberorganischer Verbindungen mittels Lithiummetall (W. Schlenk, J. Holtz, Ber. Dtsch. Chem. Ges. 1917, 50, 262-274). Diese Synthese ausgehend vom toxischen Schwermetall Quecksilber konnte sich verständlicherweise technisch nicht durchsetzen. Dagegen bildet die von K. Ziegler und H. Colonius erstmals beschriebene bequeme Synthese gemäß

R-Hal + 2 Li ----> R-Li + LiHal (1)

Hal = Cl, Br, I; R = Alkyl oder Aryl
die Grundlage für die Synthese lithiumorganischer Verbindungen (K. Ziegler, H. Colonius, Justus Liebigs Ann. Chem. 479 (1930) 135-149). Nachteil der Ziegler'schen Synthese ist, dass die Hälfte des teuren, durch Schmelzflußelektrolyse hergestellten Lithiummetalls für die Bildung des Lithiumhalogenidnebenproduktes verbraucht wird. Anstelle von Alkylhalogeniden können auch funktionalisierte organische Verbindungen mit anderen Abgangsgruppen als Hal⁻ verwendet werden, beispielsweise Ether (A. Maercker, Angew. Chem. Int. Ed. Engl. 26, (1987) 972) und Thioether (C. G. Screttas, M. M. Screttas, J. Org. Chem. 43 (1978) 1064). Auch in diesem Falle wird nur maximal die Hälfte des eingesetzten Lithiums genutzt:

R-E-R' + 2 Li ---> R-Li + R'-E-Li (2)

E = O oder S

In ähnlicher Weise entsteht bei der katalytischen Lithiierung von α-Olefinen nach B. Bogdanovic neben der lithiierten Olefinverbindung (beispielsweise Vinyllithium aus Ethen) eine stöchiometrische Menge des nicht genutzten Nebenproduktes Lithiumhydrid (B. Bogdanovic, B. Wermeckes, Angew. Chem. 94 (1981) 691; EP 0015541 A2).

Die nachteilige Bildung eines mehr oder weniger wertlosen oder ungenutzten Nebenproduktes wie LiHal, LiER' oder LiH könnte durch direkte Hydrolithiierung von Olefinen gemäß 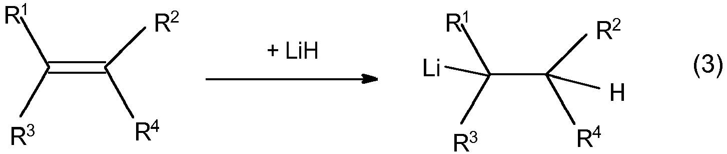 prinzipiell vermieden werden. Leider ist handelsübliches Lithiumhydrid dazu nicht nutzbar; vielmehr zersetzen sich Organolithiumverbindungen, die ein β-Wasserstoffatom enthalten, in reiner Form oder als Lösungen in Kohlenwasserstoffen gemäß der Umkehrung von Gl. (3), (K. Ziegler, U. Geliert, Liebigs Ann. Chem. 1950, 567, 179):

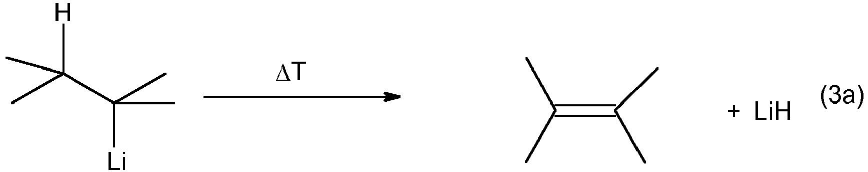

E.C. Ashby et al. untersuchten die Eignung von aktivem Lithiumhydrid LiH*, hergestellt durch Hydrogenolyse von t-Butyllithium (t-BuLi) mit Wasserstoff (ca. 100 bar), als Reduktions- und Hydrometallierungsagenz (E.C. Ashby, S. A. Noding, J. Org. Chem. 1980, 45, 1041-1044). In der Beschreibung der Erfindung wird mit hochgestelltem Sternchen ("*") eine hochreaktive Variante des jeweiligen Metallhydrids gekennzeichnet. Bei der Umsetzung von α-Olefinen mit überstöchiometrischen Mengen an LiH* in Tetrahydrofuran (THF) und in Anwesenheit ebenso überstöchiometrischer Mengen an VCl₃ wurden bestimmte Olefine quantitativ oder fast quantitativ zu den gesättigten Kohlenwasserstoffen umgesetzt. Bei der Zersetzung der Reaktionsgemische mittels D₂O wurde allerdings nur ein geringer Deuteriumeinbau (29-30 %) festgestellt. Die Autoren vermuten, dass die Reduktion über signifikante Anteile der korrespondierenden Organolithiumspezies verläuft, die durch Deuterolyse zu den deuterierten gesättigten Kohlenwasserstoffen reagieren und damit abgefangen werden können. In Benzol als Lösungsmittel konnte Octen in Gegenwart katalytischer (5 mol%) Übergangsmetallkonzentrationen und Verwendung von hochreaktivem LiH* zu Octan bzw. nach Deuterolyse zu Monodeutero-octan reduziert werden. Die beste Ausbeute wurde beim Einsatz von Cp₂TiCl₂ (77 % Octan, 50 % D-Einbau) erreicht. Diese Synthesevariante hat zum Nachteil, dass relativ große Konzentrationen an Übergangsmetallkatalysator (300 % d. Th. bei der Umsetzung in THF) benötigt werden und dass sich die vermutlich *in situ* gebildeten Organolithiumverbindungen unter H-Abstraktion aus dem Lösungsmittel zersetzen (erkenntlich am geringen D-Einbau). Bei der Umsetzungsvariante in Benzol sind die Giftigkeit des Lösungsmittels sowie die ebenfalls geringe RLi-Ausbeute (Deuteriumeinbau max. 50 %) nachteilig. Aus diesen Gründen hat die Organolithiumsynthese über die Hydrolithiierung von Olefinen keine präparative Relevanz erfahren.

Alkyllithiumverbindungen können in wasserfreien organischen Lösungsmitteln, u.a. Ethern und Kohlenwasserstoffen, hergestellt werden. Mit Ausnahme vom Methyllithium werden kommerzielle Produkte ausschließlich als Lösungen in Kohlenwasserstoffen vermarktet, da nur diese lagerstabil sind. Die starken Lithiumbasen greifen nämlich funktionalisierte Lösungsmittel wie Ether bereits bei Raumtemperatur an und zersetzen sich nach einem α- oder β-Eliminierungsmechanismus unter Bildung von Lithiumalkoholaten und anderen Folgeprodukten. Im Falle cyclischer Ether wie z.B. Tetrahydrofuran kommt die Ringöffnung unter Lithiumenolatbildung als Zersetzungsvariante hinzu. Nichtzyklische Ether, die keinen β-H-Wasserstoff aufweisen, können sich in der Regel nur nach α-H-Eliminierungsmechanismus zersetzen, wie beispielsweise für Dimethylether nachgewiesen wurde (A. Maercker, Angew. Chem. 99 (1987) 1002-19). Dieser Zersetzungsmechanismus findet aus thermodynamischen Gründen im untergeordneten Maße statt. Trotzdem wurde berichtet, dass die Beständigkeit von Lithiumorganylen, beispielsweise von Butyllithium in reinem Dimethylether schlechter ist als diejenige in Diethylether: die Zersetzung ist etwa 10-20 mal schneller (K. Ziegler, H.-G. Geliert, Justus Liebigs Ann. Chem. 567 (1950) 185).

Ähnlich wie die Alkalimetallorganyle werden auch die Dialkylverbindungen der Erdalkalielemente (R₂M) gewöhnlich aus elementarem Erdalkalimetall und Alkylhalogeniden hergestellt:

2 R-Hal + 2 M ----> R₂M + MHal₂ (4)

Hal = Cl, Br, I; M = Be, Mg, Ca, Sr, Ba

Eine direkte Synthese von beispielsweise R₂Mg-Verbindungen durch Hydrometallierung von Olefinen analog zu Gl. (3) ausgehend von handelsüblichen Eralkalimetallhydriden ist nicht möglich. Es ist deshalb versucht worden, Letztgenannte in reaktiverer Form herzustellen. Beispielsweise kann hochreaktives Magnesiumhydrid durch Hochdruckhydrierung von Grignardverbindungen bei höheren Temperaturen (75-150°C, 350 bar) gemäß

2 RMgX + 2 H₂ ---> 2 RH + MgX₂ + MgH₂* (5)

gewonnen werden (W.E. Becker, E.C. Ashby, J. Org. Chem. 29, 954 (1964)). In ähnlicher Weise können auch Dialkylmagnesiumverbindungen, beispielsweise Dibutylmagnesium durch Hochdruckhydrogenolyse (5 MPa) bei 200 °C in MgH₂* umgewandelt werden (E.J. Setijadi, C. Boyer, Phys. Chem. Chem. Phys. 2012, 14, 11386-97). Aufgrund der ungünstigen Bedingungen, der teuren Mg-Quellen und im Falle der Grignardverbindungen der unvermeidlichen Verunreinigung mit Magnesiumhalogeniden (MgX₂) hat diese MgH₂*-Bildungsweise keine Bedeutung gewonnen.

Weiterhin wurde eine Methode zur Herstellung von hochreaktivem Magnesiumhydrid durch Hydrierung von Mg-Metall in THF-Suspension und in Gegenwart eines chromhaltigen Homogenkatalysators beschrieben (B. Bogdanovic, P. Bons, S. Konstantinovic, M. Schwickardi, U. Westeppe, Chem. Ber. 1993, 126, 1371-83; US4554153A1). Der THF-lösliche Katalysator besteht aus einem CrCl₃/Mg-Anthracen-Komplex; die Hydrierung läuft nur unter Hochdruckbedingungen (z.B. 80 bar). Gemäß EP 0014983 B1 wird das auf diese Art hergestellte reaktive Magnesiumhydrid MgH₂* in Gegenwart eines Übergangsmetallkatalysators ausgewählt aus der Gruppe bestehend aus den Halogeniden der IV. bis VIII. Nebengruppe des Periodensystems der Elemente (PSE) vorzugsweise in Tetrahydrofuran im Temperaturbereich 0 bis 200°C und bei einem Druck von 1 bis 300 bar mit einem Olefin umgesetzt. Es werden Dialkylmagnesiumverbindungen mit mäßigen bis sehr guten Ausbeuten als Lösungen in THF erhalten. Diese Synthesevariante ist aufgrund der Verwendung giftiger Chromverbindungen und der notwendigen hohen Wasserstoffdrücke bei der MgH₂*-Herstellung ebenfalls ungünstig. Weiterhin ist es nachteilig, dass das Lösungsmittel THF durch Verdampfung nur sehr mühsam, unvollständig und unter Inkaufnahme von teilweiser Produktzersetzung oder durch ein Kristallisationsverfahren unter Aufwendung hoher Lösemittelmengen und signifikanter Ausbeuteverluste zu erhalten ist (experimentelle Angaben in: B. Bogdanovic, P. Bons, S. Konstantinovic, M. Schwickardi, U. Westeppe, Chem. Ber. 1993, 126, 1371-83).

Gemäß dem aus dem Dokument EP 514707 B1 bekannten Verfahren wird Magnesiumhydrid vor oder während der Umsetzung mit einem Olefin durch Mahlen auf eine Teilchengröße von ≤ 10 µm, bevorzugt ≤ 1 µm ohne Zusatz komplexer Katalysatoren aktiviert. Bei der Umsetzung mit dem Olefin in einem Etherlösemittel, bevorzugt THF oder Diglyme, wird als Katalysator ein Übergangsmetallhalogenid, wie in EP 0014983 B1 beschrieben, zugegeben. Nachteilig ist, dass die Ausbeuten an Dialkylmagnesiumverbindungen in der Regel niedrig sind (25-34 %). Weiterhin besteht nach wie vor die Schwierigkeit, etherfreies (insbesondere THF-freies) R₂Mg zu gewinnen. Dialkylmagnesiumverbindungen werden überwiegend als Magnesiumquelle bei der Herstellung von Ziegler Natta - Polyolefinkatalysatoren verwendet. Aus verschiedenen Gründen werden für diese Anwendung donorlösemittelfreie (insbesondere THF-freie) Produkte benötigt.

Die Erfindung hat sich die Aufgabe gestellt, ein Verfahren anzugeben, welches ausgehend von preiswerten, kommerziell verfügbaren Rohstoffen unter milden Bedingungen die Synthese von Organometallverbindungen RₙM (M = Alkalimetall, n = Wertigkeit des Metalls M, R = Alkylgruppe) ermöglicht, wobei
- alles aktive Metall M (d.h. Metall der Oxidationsstufe 0) in die gewünschte Organometallverbindung RₙM umgewandelt werden kann, ohne dass wenig wertvolle Nebenprodukte wie Metallhalogenide u.ä. entstehen und
- es soll die Organometallverbindung ohne Zersetzung in reiner (lösemittelfreier) Form oder als Lösung in einem Nichtdonorlösungsmittel, speziell THF-frei, isoliert werden können.

Erfindungsgemäß wird die Aufgabe gelöst, indem Olefine mittels vorgebildetem MHₙ* (GI. 6) oder mit *in situ* gebildetem Metallhydrid (GI. 7) in einer Alkylmethylether (AME) enthaltenden aprotischen und wasserfreien Flüssigphase umgesetzt werden. Dies wird im Folgenden am Beispiel der Alkyllithiumsynthese aufgezeigt:

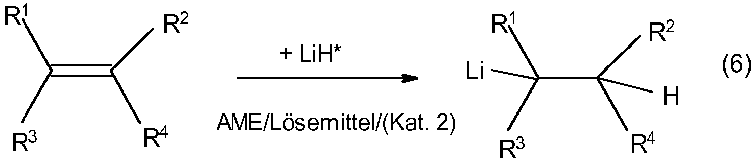

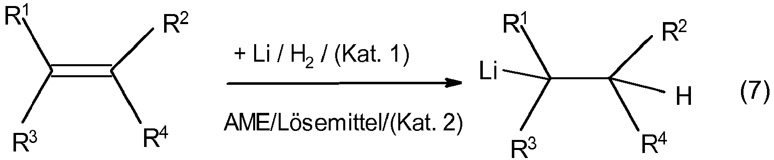

Es wurde überraschend gefunden, dass in AME-haltigem Lösemittelgemisch die Hydrometallierung mit hochreaktivem Metallhydrid (GI. 6 oder analog mit anderem Alkalimetall) oder unter *in-situ-*Bedingungen (GI. 7 oder analog mit anderen Alkaliverbindungen) glatt und mit guten Ausbeuten erfolgt.

Um Ausbeuten und Reaktionsgeschwindigkeiten der Hydrometallierung zu steigern und auch kommerzielles, nicht hochreaktives Metallhydrid verwenden zu können, ist die Anwesenheit eines Übergangskatalysators ("Kat. 2" in den Reaktionsgleichungen (6) und (7)) notwendig. Für die *in situ*-Bildung der hochreaktiven Metallhydride MHₙ* gemäß Reaktionsvariante (7) ist die Gegenwart von hochreaktivem Metall M²* und/oder einer Verbindung mit der allgemeinen Formel M¹ₓ[M²(A¹_{y}A²_{z})₃₊ₓ]_{b} (in Gl. 7 als "Kat. 1" bezeichnet) zur Erzielung einer ausreichend hohen Bildungsgeschwindigkeit des Metallhydrids MHₙ* bevorzugt. Das hochreaktive M²* muß eine mittlere Partikelgröße D₅₀ zwischen 0,01 und 100 µm aufweisen und darf nicht durch vorherigen Kontakt mit Luft, Sauerstoff, Feuchtigkeit oder anderen reaktiven Stoffen hinsichtlich seiner Reaktionsfähigkeit beeinträchtigt sein. M²* ist bevorzugt feinverteiltes Aluminiumpulver mit der angegebenen mittleren Partikelgröße D50 zwischen 0,01 und 100 µm. In der generischen Formel M¹ₓ[M²(A¹_{y}A²_{z})₃₊ₓ]_{b} ist:
- M¹ = ein Alkalimetall (Li, Na, K, Rb, Cs), ein Erdalkalimetall (Be, Mg, Ca, Sr, Ba) oder ein Element aus der Gruppe der Seltenen Erden ausgewählt aus Sc, Y, La, Ce, Pr, Nd, Pm, Eu, Gd, Tb, Dy, Ho, Er, Tm, Yb, Lu;
- x = 0 oder 1;
- M² = ein Element der 3. Hauptgruppe des PSE, ausgewählt aus B, Al, Ga oder In;
- A¹ = H oder eine Alkylgruppe, verzweigt oder unverzweigt enthaltend 1 - 18 C-Atome, wobei die bis zu vier A - Gruppen gleich oder verschieden sein können;
- A² = ein Alkoxy- (OR mit R = Alkyl mit 1-8 C-Atomen), Dialkylaminorest (NR₂ mit R = Alkyl mit 1-8 C-Atomen) oder ein Halogen aus Cl, Br, I;
- y kann die Werte 1, 2 oder 3 einnehmen, wobei y + z = 3;
- b = die Wertigkeit von M¹;
Geeignete Olefine enthalten 2 bis 18 C-Atome; es sind Olefine mit endständiger Doppelbindung, auch als α-Olefine bezeichnet, d.h., solche mit R¹ und R³ = H. Besonders bevorzugt sind Ethen, 1-Propen, 1-Buten, 1-Penten, 1-Hexen, 1-Hepten, 1-Octen, 1-Decen.

Für die Hydrometallierung nach Gl. 6 sind die kommerziell erhältlichen Metallhydride, beispielsweise kommerzielles Lithiumhydridpulver ohne die Verwendung von Übergangsmetallkatalysatoren (Kat. 2 in Gl. (6)) nicht verwendungsfähig, da sie nicht reagieren.

Geeignete Donorlösungsmittel sind Alkylmethylether R-O-CH₃ (AME) mit R = Alkylrest, ausgewählt aus der Gruppe bestehend aus Dimethylether, Methylethylether, Methylpropylether, Methylbutylether, Methylpentylether, Methylcyclopentylether, Methylhexylether. Besonders bevorzugt ist Dimethylether.

Durch Zugabe eines übergangsmetallhaltigen Katalysators (Kat. 2 in Gl. 6 und 7) kann die Geschwindigkeit der Hydrometallierung z.T. deutlich gesteigert werden. Als Katalysatoren kommen die Halogen- oder Alkoxyverbindungen der 4. und 5. Nebengruppe des PSE in Frage, insbesondere die Chloride des Ti, Zr, Hf, V, Nb, Ta sowie Metallocenverbindungen der genannten Metalle wie beispielsweise Cp₂TiCl₂, CpTiCl₃, Cp₂ZrCl₂ oder andere Komplexverbindungen der genannten Metalle. Sie werden in Mengen von 0,001 bis 10 mol%, bevorzugt 0,005 bis 5 mol% bezogen auf das Metallhydrid MHₙ zugegeben.

Die Metallhydridaddition gemäß den Gl. (6) bzw. (7) (die Reaktion ist für das Beispiel M = Li dargestellt, für die weiteren erfindungsgemäß einsetzbaren Metallhydride gelten diese in analoger Weise) kann im Temperaturbereich zwischen -40 und +150°C, bevorzugt -20 und 100 °C, besonders bevorzugt 0 bis 50 °C erfolgen. Wird als AME der besonders bevorzugte und bei Raumtemperatur (RT) gasförmige Dimethylether verwendet, ist durch die Verwendung eines Druckhaltesystems und/oder eines bei niedrigen Temperaturen (z.B. -40 bis +20 °C, je nach Druck) betriebenen Rückflußkühlersystems (Kondensators) angezeigt. Besonders bevorzugt sind Mischungen aus Kohlenwasserstoffen und AME's, ganz besonders bevorzugt Mischungen aus gesättigten Kohlenwasserstoffen wie Pentan, Hexan, Heptan, Octan, Decan, Dodekan oder kommerziell erhältliche Kohlenwasserstoffgemische wie technisches Hexan, technisches Heptan, oder Siedeschnitte (Petrolether) wie beispielsweise die unter dem Markennamen "Shellsole" von Firma Shell vermarkteten Petrolether, mit Dimethylether. Der Kohlenwasserstoffgehalt kann bis zu 95 Gew%, bevorzugt bis 80 Gew.% Anteil an der Reaktionsmischung ausmachen. Da sich Dimethylether in den genannten Kohlenwasserstoffen gut löst, ist bei besonders bevorzugten Reaktionstemperaturen im Bereich zwischen etwa 0 und 50°C eine bequeme, fast drucklose Prozeßführung möglich. Der AME-Gehalt im Reaktionsgemisch richtet sich nach der Konzentration des Metalls M bzw. des Metallhydrids MHₙ. Das Molverhältnis zwischen AME und M bzw. MHₙ beträgt mindestens 0,01 : 1 und maximal 50 : 1, bevorzugt mindestens 0,1 : 1 bis 30 : 1 und besonders bevorzugt 0,2 : 1 bis 20 : 1.

Für den Fall, dass kein fertig vorgebildetes reaktives Metallhydrid verwendet wird, sondern dieses erst *in situ* gemäß Gl. 7 erzeugt wird, ist ein Katalysator "Kat. 1", das ist entweder feinverteiltes, aktives Metall M²* und/oder es sind Verbindungen der allgemeinen Formel M¹ₓ[M²(A¹_{y}A²_{z})₃₊ₓ]_{b} in stöchiometrischen oder in Anwesenheit einer Quelle für Wasserstoff in katalytischen Mengen zuzugeben. Das Molverhältnis Katalysator zu M bzw. MHₙ beträgt mindestens 0,0001 : 1 und maximal 0,5 : 1, bevorzugt mindestens 0,001 : 1 bis 0,3 : 1 und besonders bevorzugt 0,005 : 1 bis 0,2 : 1. Es wurde überraschend gefunden, dass die Hydrierung von M in Gegenwart von hochreaktivem Metall M²* und/oder Verbindungen der allgemeinen generischen Formel M¹ₓ[M²(A¹_{y}A²_{z})₃₊ₓ]_{b} bevorzugt unter Wasserstoffatmosphäre unter milden Bedingungen in hoher Ausbeute gelingt. Voraussetzung ist, dass das Metall M ein negativeres Standardpotential als das Metall M² bzw. M² in M¹ₓ[M²(A¹_{y}A²_{z})₃₊ₓ]_{b} besitzt. Im Folgenden werden die jeweiligen Standardpotentiale zusammengefasst (D.R. Lide, Handbook of Chemistry and Physics 83rd ed, 2002-2003):

| 1. Hauptgruppe M= | Normalpotential (V) | 2. Hauptgruppe M= | Normalpotential (V) | 3. Hauptgruppe M²= | Normalpotential (V) |
|---|---|---|---|---|---|
| Li | -3,0401 | Be | -1,847 | B | |
| Na | -2,71 | Mg | -2,372 | Al | -1,662 |
| K | -2,931 | Ca | -2,868 | Ga | -0,539 |
| Rb | -2,98 | Sr | -2,899 | In | -0,3382 |
| Cs | -3,026 | Ba | -2,912 | | |

Es wird angenommen, dass der Wasserstoff von M²-H - Bindungen an die unedlen Metalle M übertragen wird und die Reaktionstriebkraft in der Bildung des oder der thermodynamisch stabilere(n) Hydrids/Hydride besteht. Durch die Dehydrierung von M¹ₓ[M²(A¹_{y}A²_{z})₃₊ₓ]_{b} bildet sich elementares M²*; dieses liegt in extrem reaktiver (feinverteilter, z.T. amorpher Form) vor und es ist gegenüber beispielsweise Wasserstoff sehr reaktiv, d.h. es wird in Gegenwart einer Wasserstoffquelle rehydriert. Vor diesem Hintergrund ist es verständlich, dass die Verwendung von M¹ₓ[M²(A¹_{y}A²_{z})₃₊ₓ]_{b} oder aktiviertem elementarem M²* in katalytischen Mengen ausreichend ist.

Als stöchiometrische Hydrierungsmittel oder Hydrierkatalysatoren werden bevorzugt Verbindungen des Aluminiums M¹ₓ[Al(A¹_{y}A²_{z})₃₊ₓ]_{b} oder aktives/aktiviertes Aluminiummetall verwendet. Insbesondere sind die Alkalialanate LiAlH₄ und NaAlH₄, Na[H₂AlEt₂], die im industriellen Maßstab hergestellt werden, besonders geeignet. Auch Alan (AlH₃) und Alkylaluminiumhydride wie Diisobutylaluminiumhydrid, lassen sich mit gleichem Erfolg einsetzen.

Es wurde weiterhin überraschend gefunden, dass auch bestimmte Nichthydridverbindungen der allgemeinen Formel M¹ₓ[M²(A¹_{y}A²_{z})₃₊ₓ]_{b} verwendbar sind (also solche mit weder A¹ noch A² = H), wenn der zur Hydrierung von M notwendige Wasserstoff in elementarer Form (H₂) oder in molekular gespeicherter Form (z.B. als 1,3-Cyclohexadien) zugeführt wird. Ohne an die Richtigkeit der Hypothese gebunden zu sein, wird angenommen, dass sich unter Hydrierbedingungen eine reaktive Form des Metalls M²* oder eine Legierung aus M² und M bildet, die Wasserstoff aufnehmen und diesen in einem nachgelagerten Schritt auf das unedle Metall M übertragen kann. Dies wird am Beispiel der industriell verfügbaren Aluminiumalkyle (also M² = Al) erläutert. Wird beispielsweise Triethylaluminium mit elementarem Lithium in AME-haltigen Suspensionen umgesetzt, so wird die Bildung von schwarzem, feinverteiltem Aluminium beobachtet, während sich das Lithium zumindest teilweise auflöst:

4 Et₃Al + 3 Li ----> 3 LiAlEt₄ + Al*↓ (8)

Et₃Al + 3 Li ----> 3 LiEt + Al*↓ (8a)

LiEt + Et₃Al ----> LiAlEt₄ (8b)

Das feinverteilte Al* reagiert bereitwillig mit Wasserstoff zu AlH₃. Letzteres wiederum kann den Wasserstoff unter milden Bedingungen auf unedle Metalle M übertragen. Neben Triethylaluminium sind auch beispielsweise Trimethylaluminium und Tributylaluminium verwendbar.

Ähnlich bildet sich durch Umsetzung von AlCl₃ in AME-haltigen Lösungen durch Umsetzung mit beispielsweise Lithiummetall neben LiAlCl₄ reaktives elementares Aluminiummetall. Auch die Aluminate wie Li[AlEt₄] können mit Wasserstoff zu hydridhaltigen Spezies reagieren.

Die Reaktionstemperaturen bei der *in situ*-Metallhydridsynthese gemäß Gl. 7 können in weitem Rahmen variiert werden, in der Regel liegen sie zwischen -20 und 150 °C, bevorzugt 0 und 100 °C und besonders bevorzugt zwischen 25 und 70 °C. Falls eine Reaktionsführung gemäß Gl. 7 oder Gl. 8 beabsichtigt ist, muß ein Kontakt zu elementarem Wasserstoff gewährleistet sein. Häufig reicht eine überdrucklose Fahrweise; um aber möglichst kurze Reaktionszeiten zu erzielen, bietet es sich an, unter H₂-Druckbedingungen zu arbeiten. Bevorzugt beträgt der H₂-Überdruck 2 - 300 bar, besonders bevorzugt 10 - 100 bar. Es ist auch möglich, als Wasserstoffquelle eine Verbindung zu einzusetzen, die Wasserstoff unter den gewählten Arbeitsbedingungen abgibt. Beispiele sind: 1,3-Cyclohexadien, Decalin, N-Ethylcarbazol.

Es wurde überraschend gefunden, dass Alkylmethylether, insbesondere Dimethylether, einfach und vollständig vom Reaktionsprodukt MRₙ abgetrennt werden können. Dies ist überraschend, da dem Fachmann bekannt ist, dass beispielsweise Dimethylether mit einem Dipolmoment von 1,3 Debeye (zum Vergleich: Diethylether = 1,098 Debeye) eine starke Lewis-Base bzw. ein ausgesprochen starkes Donorlösemittel ist. Es wurde gefunden, dass es erfindungsgemäß oft ausreicht, das bevorzugt klarfiltrierte Reaktionsgemisch bei Raumtemperatur oder wenig erhöhter Temperatur (maximal 60°C) bevorzugt unter Vakuumbedingungen aufzukonzentrieren oder einzudampfen. Bei Verwendung von hochsiedenden Kohlenwasserstoffcosolvenzien (das sind bevorzugt Kohlenwasserstoffe mit C-Kettenlängen von mindestens 7, beispielsweise Heptan, Octan etc) kann der niedrigsiedende Dimethylether selektiv destillativ abgetrennt werden. Die Alkylmetallverbindungen MRₙ werden dabei als Reinstoffe oder Lösungen in Kohlenwasserstoffen mit AME-Restgehalten von maximal 20 mol%, bevorzugt maximal 5 mol% und besonders bevorzugt maximal 1 mol% bezogen auf RₙM - Inhalt und Kohlenwasserstoffgehalten bis maximal 95 Gew% erhalten.

Da die Abtrennung des oder der AME's unter industriell relevanten Bedingungen und vertretbaren Kosten in der Regel nicht ganz vollständig bewerkstelligt werden kann, enthalten erfindungsgemäße Produkte bzw. Produktlösungen typischerweise einen Restgehalt an AME und/oder (je nach Lagerdauer und -bedingungen) an nicht flüchtigen AME-Abbauprodukten. Bei Letzteren handelt es sich überwiegend um Lithiummethylat, welches durch Etherspaltung gebildet wird, wie am Beispiel M = Li und AME = Dimethylether dargestellt wird:

2 R-Li + Me₂O ----> R-(CH₂)-Li + MeO-Li + RH (9)

Die erfindungsgemäßen Produkte enthalten minmal 0,001 bis maximal 20 mol%, bevorzugt 0,001 bis maximal 5 mol%, besonders bevorzugt 0,001 bis maximal 1 mol% ausgewählt aus AME (bevorzugt Dimethylether) und/oder Lithiummethylat, bezogen auf Metallorganyl RₙM.

## Patentansprüche

1. Verfahren zur Herstellung von metallorganischen Verbindungen RMₙ der Alkalielemente mit n = Wertigkeit des Metalls M und R = Alkylrest mit 2 bis 18 C-Atomen, **dadurch gekennzeichnet, dass** ein α-Olefin in einem Alkylmethylether oder einem Alkylmethylether enthaltenden Lösungsmittelgemisch mittels des Metalls M und in Anwesenheit einer Wasserstoffquelle sowie in Gegenwart eines Übergangsmetallkatalysators hydrometalliert wird, wobei das Molverhältnis zwischen Alkylmethylether und Metall M mindestens 0,01:1 und maximal 50:1 beträgt, wobei der Alkylmethylether ausgewählt ist aus der Gruppe bestehend aus Dimethylether, Methylethylether, Methylpropylether, Methylbutylether, Methylpentylether, Methylcyclopentylether, Methylhexylether, besonders bevorzugt Dimethylether ist,
wobei
reaktives Metallhydrid MHₙ* *in situ* und in Gegenwart von feinverteiltem Metall M²* mit einer mittleren Partikelgröße D₅₀ von 0,01 bis 100 µm sowie einer Quelle für Wasserstoff hergestellt wird,
wobei M² = ein Element der 3. Hauptgruppe des PSE ausgewählt aus der Gruppe bestehend aus B, Al, Ga, In ist;
n = 1, entsprechend der Wertigkeit des Metalls M ist,
und/oder
reaktives Metallhydrid MHₙ* *in situ* und in Gegenwart einer Verbindung mit der allgemeinen Formel M¹ₓ[M²(A¹_{y}A²_{z})₃₊ₓ]_{b} hergestellt wird,
wobei M¹ = ein Alkalimetall ausgewählt aus der Gruppe bestehend aus Li, Na, K, Rb, Cs; ein Erdalkalimetall ausgewählt aus der Gruppe bestehend aus Be, Mg, Ca, Sr, Ba oder ein Element aus der Gruppe der Seltenen Erden ausgewählt aus der Gruppe bestehend aus Sc, Y, La, Ce, Pr, Nd, Pm, Eu, Gd, Tb, Dy, Ho, Er, Tm, Yb, Lu ist;
x = 0 oder 1 ist;
M² = ein Element der 3. Hauptgruppe des PSE ausgewählt aus der Gruppe bestehend aus B, Al, Ga, In ist;
A¹ = H oder eine Alkylgruppe, verzweigt oder unverzweigt enthaltend 1 - 18 C-Atome ist, wobei die bis zu vier A- Gruppen gleich oder verschieden sein können;
A² = ein Alkoxy- OR mit R = Alkyl mit 1-8 C-Atomen, Dialkylaminorest -NR₂ mit R = Alkyl mit 1-8 C-Atomen oder ein Halogen aus Cl, Br, I ist;
y die Werte 1, 2 oder 3 einnehmen können und wobei y + z = 3 ist;
b = die Wertigkeit von M¹ ist;
n = 1 oder 2, entsprechend der Wertigkeit des Metalls M ist.

2. Verfahren zur Herstellung von metallorganischen Verbindungen RMₙ der Alkalielemente mit n = Wertigkeit des Metalls M und R = Alkylrest mit 2 bis 18 C-Atomen, **dadurch gekennzeichnet, dass** ein α-Olefin in einem Alkylmethylether enthaltenden Lösungsmittel oder Lösungsmittelgemisch mit einem reaktiven Metallhydrid MHₙ* in Gegenwart eines Übergangsmetallkatalysators hydrometalliert wird, wobei das Molverhältnis zwischen Alkylmethylether und hochreaktivem Metallhydrid MHₙ* mindestens 0,01:1 und maximal 50:1 beträgt, wobei der Alkylmethylether ausgewählt ist aus der Gruppe bestehend aus Dimethylether, Methylethylether, Methylpropylether, Methylbutylether, Methylpentylether, Methylcyclopentylether, Methylhexylether, besonders bevorzugt Dimethylether ist
wobei
reaktives Metallhydrid MHₙ* *in situ* und in Gegenwart von feinverteiltem Metall M²* mit einer mittleren Partikelgröße D₅₀ von 0,01 bis 100 µm sowie einer Quelle für Wasserstoff hergestellt wird,
wobei M² = ein Element der 3. Hauptgruppe des PSE ausgewählt aus der Gruppe bestehend aus B, Al, Ga, In ist;
n = 1, entsprechend der Wertigkeit des Metalls M ist,
und/oder
reaktives Metallhydrid MHₙ* *in situ* und in Gegenwart einer Verbindung mit der allgemeinen Formel M¹ₓ[M²(A¹_{y}A²_{z})₃₊ₓ]_{b} hergestellt wird, wobei M¹ = ein Alkalimetall ausgewählt aus der Gruppe bestehend aus Li, Na, K, Rb, Cs; ein Erdalkalimetall ausgewählt aus der Gruppe bestehend aus Be, Mg, Ca, Sr, Ba oder ein Element aus der Gruppe der Seltenen Erden ausgewählt aus der Gruppe bestehend aus Sc, Y, La, Ce, Pr, Nd, Pm, Eu, Gd, Tb, Dy, Ho, Er, Tm, Yb, Lu ist;
x = 0 oder 1 ist;
M² = ein Element der 3. Hauptgruppe des PSE ausgewählt aus der Gruppe bestehend aus B, Al, Ga, In ist;
A¹ = H oder eine Alkylgruppe, verzweigt oder unverzweigt enthaltend 1 - 18 C-Atome ist, wobei die bis zu vier A- Gruppen gleich oder verschieden sein können;
A² = ein Alkoxy- OR mit R = Alkyl mit 1-8 C-Atomen, Dialkylaminorest -NR₂ mit R = Alkyl mit 1-8 C-Atomen oder ein Halogen aus Cl, Br, I ist;
y die Werte 1, 2 oder 3 einnehmen können und wobei y + z = 3 ist;
b = die Wertigkeit von M¹ ist;
n = 1, entsprechend der Wertigkeit des Metalls M ist.

3. Verfahren nach Anspruch 1 oder 2, **dadurch gekennzeichnet, dass** das Metall M ausgewählt ist aus Li, Na, K, Rb, Cs, besonders bevorzugt Li ist.

4. Verfahren nach Anspruch 1 oder 2, **dadurch gekennzeichnet, dass** das α-Olefin ausgewählt ist aus der Gruppe bestehend aus Ethen, 1-Propen, 1-Buten, 1-Penten, 1-Hexen, 1-Hepten, 1-Octen, 1-Decen.

5. Verfahren nach einem oder mehreren der Ansprüche 1 bis 4, **dadurch gekennzeichnet, dass** das Molverhältnis zwischen Alkylmethylether und M oder MHₙ mindestens 0,1 : 1 bis 30 : 1 und bevorzugt 0,2 : 1 bis 20 : 1 beträgt.

6. Verfahren nach einem oder mehreren der Ansprüche 1 bis 5, **dadurch gekennzeichnet, dass** die reaktiven Metallhydride MHₙ* in feinverteilter Form mit einer mittleren Partikelgröße D₅₀ von 0,01 bis 100 µm eingesetzt werden.

7. Verfahren nach einem oder mehreren der Ansprüche 1 bis 6, **dadurch gekennzeichnet, dass** M² Aluminium ist.

8. Verfahren nach nach einem oder mehreren der Ansprüche 1 bis 6, **dadurch gekennzeichnet, dass** als M¹ₓ[M²(A¹_{y}A²_{z})₃₊ₓ]_{b} ausgewählt aus der Gruppe bestehend aus komplexen Aluminiumhydriden, Alkylaluminiumhydriden, Alkylaluminiumverbindungen, Aluminiumchlorid oder Metallhalogenaluminaten eingesetzt wird.

9. Verfahren nach Anspruch 8, **dadurch gekennzeichnet, dass** ein komplexes Aluminiumhydrid ausgewählt aus der Gruppe bestehend aus LiAlH₄, NaAlH₄, Na[H₂AlEt₂]; als Aluminiumhydrid Diisobutylaluminiumhydrid oder AlH₃; eine Alkylaluminiumverbindung ausgewählt aus der Gruppe bestehend aus Me₃Al, Et₃Al oder Bu₃Al, Aluminiumchlorid oder ein Metallhalogenaluminat ausgewählt aus der Gruppe bestehend aus LiAlCl₄ oder NaAlCl₄ eingesetzt wird.

10. Verfahren nach einem oder mehreren der Ansprüche 1 bis 6, **dadurch gekennzeichnet, dass** die Verbindung M¹ₓ[M²(A¹_{y}A²_{z})₃₊ₓ]_{b} in stöchiometrischen oder in Anwesenheit einer Quelle für Wasserstoff in mindestens katalytischen Mengen eingesetzt wird, wobei das Molverhältnis Katalysator zu M oder MHₙ mindestens 0,0001 : 1 und maximal 0,5 : 1, bevorzugt mindestens 0,001 : 1 bis 0,3 : 1 und besonders bevorzugt 0,005 : 1 bis 0,2 : 1 beträgt.

11. Verfahren nach einem oder mehreren der Ansprüche 1 bis 6, **dadurch gekennzeichnet, dass** die Bildung des Metallhydrids MHₙ* *in situ* bei -20 bis 150°C, bevorzugt 0 bis 100°C und besonders bevorzugt zwischen 25 und 70°C erfolgt.

12. Verfahren nach einem oder mehreren der Ansprüche 1 bis 6, **dadurch gekennzeichnet, dass** die MHₙ*-Bildung bevorzugt unter H₂-Atmosphäre im Druckbereich 1 - 300 bar, besonders bevorzugt 10 - 100 bar erfolgt.

13. Metallorganische Zusammensetzungen erhalten nach einem oder mehreren der Ansprüche 1 bis 12, enthaltend metallorganische Verbindungen RMₙ der Alkalielemente mit n = Wertigkeit des Metalls M und R = Alkylrest mit 2 bis 18 C-Atomen sowie bezogen auf den RMₙ-Gehalt einen Anteil von mindestens 0,001 bis maximal 20 mol%, bevorzugt 0,001 bis maximal 5 mol%, besonders bevorzugt 0,001 bis maximal 1 mol% an Alkylmethylether und/oder Lithiummethylat.

14. Metallorganische Zusammensetzungen erhalten nach einem oder mehreren der Ansprüche 1 bis 12, enthaltend metallorganische Verbindungen RMₙ der Alkalielemente mit n = Wertigkeit des Metalls M und R = Alkylrest mit 2 bis 18 C-Atomen sowie bezogen auf den RMₙ-Gehalt einen Anteil von mindestens 0,001 bis maximal 20 mol%, bevorzugt 0,001 bis maximal 5 mol%, besonders bevorzugt 0,001 bis maximal 1 mol% Dimethylether und/oder Lithiummethylat und bis zu 95 Gew.% eines Kohlenwasserstofflösungsmittels.

## Claims

1. A method for producing organometallic compounds RMₙ of the alkali elements, where n = valence of the metal M and R = alkyl residue with 2 to 18 C atoms, **characterized in that** an α-olefin is hydrometalated in an alkyl methyl ether or in an alkyl methyl ether-containing solvent mixture by means of the metal M and in the presence of a hydrogen source and in the presence of a transition metal catalyst, wherein the molar ratio between alkyl methyl ether and metal M is at least 0.01:1 and at most 50:1, wherein the alkyl methyl ether is selected from the group consisting of dimethyl ether, methyl ethyl ether, methyl propyl ether, methyl butyl ether, methyl pentyl ether, methyl cyclopentyl ether, methyl hexyl ether, particularly preferably dimethyl ether,
wherein
reactive metal hydride MHₙ* is produced *in situ* and in the presence of finely dispersed metal M²* with a mean particle size D₅₀ of 0.01 to 100 µm and a source for hydrogen,
wherein M² = an element of the 3^{rd} main group of the PTE selected from the group consisting of B, Al, Ga, In;
n = 1, corresponding to the valence of the metal M,
and/or
reactive metal hydride MHₙ* is produced *in situ* and in the presence of a compound having the general formula M¹ₓ[M²(A¹_{y}A²_{z})_{3+z}]_{b},
wherein M¹ = an alkali metal selected from the group consisting of Li, Na, K, Rb, Cs; an alkaline earth metal selected from the group consisting of Be, Mg, Ca, Sr, Ba, or an element from the group of the rare earths selected from the group consisting of Sc, Y, La, Ce, Pr, Nd, Pm, Eu, Gd, Tb, Dy, Ho, Er, Tm, Yb, Lu;
x = 0 or 1;
M² = an element of the 3^{rd} main group of the PTE selected from the group consisting of B, Al, Ga, In;
A¹ = H or an alkyl group, branched or unbranched, containing 1-18 C atoms, wherein the up to four A groups can be identical or different;
A² = an alkoxy residue OR where R = alkyl with 1-8 C atoms, dialkylamino residue -NR₂ where R = alkyl with 1-8 C atoms or a halogen from Cl, Br, I;
y can assume the value 1, 2 or 3, and wherein y + z = 3;
b = the valence of M¹;
n = 1 or 2, corresponding to the valence of the metal M.

2. A method for producing organometallic compounds RMₙ of the alkali elements, where n = valence of the metal M and R = alkyl residue with 2 to 18 C atoms, **characterized in that** an α-olefin is hydrometalated in an alkyl methyl ether-containing solvent or solvent mixture with a reactive metal hydride MHₙ* in the presence of a transition metal catalyst, wherein the molar ratio between alkyl methyl ether and highly reactive metal hydride MHₙ* is at least 0.01:1 and at most 50:1, wherein the alkyl methyl ether is selected from the group consisting of dimethyl ether, methyl ethyl ether, methyl propyl ether, methyl butyl ether, methyl pentyl ether, methyl cyclopentyl ether, methyl hexyl ether, particularly preferably dimethyl ether,
wherein
reactive metal hydride MHₙ* is produced in *situ* and in the presence of finely dispersed metal M²* with a mean particle size D₅₀ of 0.01 to 100 µm and a source for hydrogen,
wherein M² = an element of the 3^{rd} main group of the PTE selected from the group consisting of B, Al, Ga, In;
n = 1, corresponding to the valence of the metal M,
and/or
reactive metal hydride MHₙ* is produced in *situ* and in the presence of a compound having the general formula M¹ₓ[M²(A¹_{y}A²_{z})₃₊ₓ]_{b},
wherein M¹ = an alkali metal selected from the group consisting of Li, Na, K, Rb, Cs; an alkaline earth metal selected from the group consisting of Be, Mg, Ca, Sr, Ba, or an element from the group of the rare earths selected from the group consisting of Sc, Y, La, Ce, Pr, Nd, Pm, Eu, Gd, Tb, Dy, Ho, Er, Tm, Yb, Lu;
x = 0 or 1;
M² = an element of the 3^{rd} main group of the PTE selected from the group consisting of B, Al, Ga, In;
A¹ = H or an alkyl group, branched or unbranched, containing 1-18 C atoms, wherein the up to four A groups can be identical or different;
A² = an alkoxy residue OR where R = alkyl with 1 - 8 C atoms, dialkylamino residue -NR₂ where R = alkyl with 1-8 C atoms or a halogen from Cl, Br, I;
y can assume the value 1, 2 or 3, and wherein y + z = 3 ;
b = the valence of M¹;
n = 1, corresponding to the valence of the metal M.

3. The method according to claim 1 or 2, **characterized in that** the metal M is selected from Li, Na, K, Rb, Cs, particularly preferably is Li.

4. The method according to claim 1 or 2, **characterized in that** the α-olefin is selected from the group consisting of ethene, 1-propene, 1-butene, 1-pentene, 1-hexene, 1-heptene, 1-octene, 1-decene.

5. The method according to one or more of claims 1 to 4, **characterized in that** the molar ratio between alkyl methyl ether and M or MHₙ is at least 0.1:1 to 30:1 and preferably 0.2:1 to 20:1.

6. The method according to one or more of claims 1 to 5, **characterized in that** the reactive metal hydrides MHₙ* are used in finely dispersed form with a mean particle size D₅₀ of 0.01 to 100 µm.

7. The method according to any of claims 1 to 6, **characterized in that** M² is aluminum.

8. The method according to any of claims 1 to 6, **characterized in that** the M¹ₓ[M²(A¹_{y}A²_{z})₃₊ₓ]_{b} is selected from the group consisting of complex aluminum hydrides, alkylaluminum hydrides, alkylaluminum compounds, aluminum chloride or metal halogen aluminates.

9. The method according to claim 8, **characterized in that** a complex aluminum hydride selected from the group consisting of LiAlH₄, NaAlH₄, Na [H₂AlEt₂]; as aluminum hydride diisobutylaluminum hydride or AlH₃; an alkylaluminum compound selected from the group consisting of aus Me₃Al, Et₃Al or Bu₃Al, aluminum chloride, or a metal halogen aluminate selected from the group consisting of LiAlCl₄ or NaAlCl₄ is used.

10. The method according to any of claims 1 to 6, **characterized in that** the compound M¹ₓ[M²(A¹_{y}A²_{z})₃₊ₓ]_{b} is used in stoichiometric quantities or in the presence of a source for hydrogen in at least catalytic quantities, wherein the molar ratio of catalyst to M or MHₙ is at least 0,0001:1 and at most 0.5:1, preferably at least 0.001:1 to 0.3:1 and particularly preferably 0.005:1 to 0.2:1.

11. The method according to any of claims 1 to 6, **characterized in that** the formation of the metal hydride MHₙ* occurs in *situ* at -20 to 150°C, preferably 0 to 100°C, and particularly preferably between 25 and 70°C.

12. The method according to any of claims 1 to 6, **characterized in that** the MHₙ* formation occurs preferably under an H₂ atmosphere in the pressure range 1 - 300 bar, particularly preferably 10 - 100 bar.

13. Organometallic compositions obtained according to one or more of claims 1 to 12, containing organometallic compounds RMₙ of the alkali elements, where n = valence of the metal M and R = alkyl residue with 2 to 18 C atoms, as well as a content, with respect to the RMₙ content, of at least 0.001 to at most 20 mol %, preferably 0.001 to at most 5 mol %, particularly preferably 0.001 to at most 1 mol % of alkyl methyl ether and/or lithium methylate.

14. Organometallic compositions obtained according to one or more of claims 1 to 12, containing organometallic compounds RMₙ of the alkali elements, where n = valence of the metal M and R = alkyl residue with 2 to 18 C atoms, as well as a content, with respect to the RMₙ content, of at least 0.001 to at most 20 mol %, preferably 0.001 to at most 5 mol %, particularly preferably 0.001 to at most 1 mol % of dimethyl ether and/or lithium methylate and up to 95% by weight of a hydrocarbon solvent.

## Revendications

1. Procédé de préparation de composés organo-métalliques RMₙ d'éléments alcalins, où l'indice n indique la valence du métal M et R représente un groupe alkyle comportant de 2 à 18 atomes de carbone, **caractérisé en ce que** l'on réalise l'hydrogéno-métallation d'une alpha-oléfine, dans un alkyl-méthyl-éther ou un mélange de solvants contenant un alkyl-méthyl-éther, au moyen du métal M et en présence d'une source d'hydrogène ainsi qu'en présence d'un catalyseur à base d'un métal de transition, étant entendu que le rapport molaire entre l'alkyl-méthyl-éther et le métal M vaut au moins 0,01/1 et au plus 50/1 et que l'alkyl-méthyl-éther est choisi dans l'ensemble formé par les diméthyl-éther, méthyl-éthyl-éther, méthyl-propyl-éther, méthyl-butyl-éther, méthyl-pentyl-éther, méthyl-cyclopentyl-éther et méthyl-hexyl-éther, le diméthyl-éther étant particulièrement préféré, et étant entendu
que l'on prépare *in situ* un hydrure de métal réactif MHₙ^{∗}, en présence d'un métal M^{2∗} à l'état finement divisé, présentant une taille moyenne de particules D₅₀ de 0,01 à 100 µm, ainsi que d'une source d'hydrogène,
où M² représente un élément du troisième groupe principal du Tableau Périodique des Eléments, choisi dans l'ensemble constitué par B, Al, Ga et In,
et l'indice n vaut 1, correspondant à la valence du métal M,
et/ou que l'on prépare *in situ* un hydrure de métal réactif MHₙ^{∗},
en présence d'un composé de formule générale M¹ₓ[M²(A¹_{y}A²_{z})₃₊ₓ]_{b}, dans laquelle
- M¹ représente un métal alcalin choisi dans l'ensemble constitué par Li, Na, K, Rb et Cs, un métal alcalino-terreux choisi dans l'ensemble constitué par Be, Mg, Ca, Sr et Ba, ou un élément du groupe des terres rares, choisi dans l'ensemble constitué par Se, Y, La, Ce, Pr, Nd, Pm, Eu, Gd, Tb, Dy, Ho, Er, Tm, Yb et Lu,
- l'indice x vaut 0 ou 1,
- M² représente un élément du troisième groupe principal du Tableau Périodique des Eléments, choisi dans l'ensemble constitué par B, Al, Ga et In,
- A¹ représente un atome d'hydrogène ou un groupe alkyle, ramifié ou non ramifié, comportant de 1 à 18 atomes de carbone, étant entendu que ces groupes A, dont le nombre peut aller jusqu'à quatre, peuvent être identiques ou différents,
- A² représente un groupe alcoxy -OR où R représente un groupe alkyle comportant de 1 à 8 atomes de carbone, un groupe dialkylamino -NR₂ où R représente un groupe alkyle comportant de 1 à 8 atomes de carbone, ou un atome d'halogène choisi parmi chlore, brome et iode,
- l'indice y peut valoir 1, 2 ou 3, et la somme y+z vaut 3,
- l'indice b est égal à la valence de M¹,
- et l'indice n vaut 1 ou 2 et correspond à la valence du métal M.

2. Procédé de préparation de composés organo-métalliques RMₙ d'éléments alcalins, où l'indice n indique la valence du métal M et R représente un groupe alkyle comportant de 2 à 18 atomes de carbone, **caractérisé en ce que** l'on réalise l'hydrogéno-métallation d'une alpha-oléfine, dans un solvant ou un mélange de solvants contenant un alkyl-méthyl-éther, au moyen d'un hydrure de métal réactif MHₙ^{∗} et en présence d'un catalyseur à base d'un métal de transition, étant entendu que le rapport molaire entre l'alkyl-méthyl-éther et l'hydrure de métal fortement réactif MHₙ^{∗} vaut au moins 0,01/1 et au plus 50/1 et que l'alkyl-méthyl-éther est choisi dans l'ensemble formé par les diméthyl-éther, méthyl-éthyl-éther, méthyl-propyl-éther, méthyl-butyl-éther, méthyl-pentyl-éther, méthyl-cyclopentyl-éther et méthyl-hexyl-éther, le diméthyl-éther étant particulièrement préféré, et étant entendu
**que** l'on prépare *in situ* l'hydrure de métal réactif MHₙ^{∗}, en présence d'un métal M^{2∗} à l'état finement divisé, présentant une taille moyenne de particules D₅₀ de 0,01 à 100 µm, ainsi que d'une source d'hydrogène,
où M² représente un élément du troisième groupe principal du Tableau Périodique des Eléments, choisi dans l'ensemble constitué par B, Al, Ga et In,
et l'indice n vaut 1, correspondant à la valence du métal M, et/ou que l'on prépare *in situ* l'hydrure de métal réactif MHₙ^{∗} en présence d'un composé de formule générale M¹ₓ[M²(A¹_{y}A²_{z})₃₊ₓ]_{b}, dans laquelle
- M¹ représente un métal alcalin choisi dans l'ensemble constitué par Li, Na, K, Rb et Cs, un métal alcalino-terreux choisi dans l'ensemble constitué par Be, Mg, Ca, Sr et Ba, ou un élément du groupe des terres rares, choisi dans l'ensemble constitué par Sc, Y, La, Ce, Pr, Nd, Pm, Eu, Gd, Tb, Dy, Ho, Er, Tm, Yb et Lu,
- l'indice x vaut 0 ou 1,
- M² représente un élément du troisième groupe principal du Tableau Périodique des Eléments, choisi dans l'ensemble constitué par B, Al, Ga et In,
- A¹ représente un atome d'hydrogène ou un groupe alkyle, ramifié ou non ramifié, comportant de 1 à 18 atomes de carbone, étant entendu que ces groupes A, dont le nombre peut aller jusqu'à quatre, peuvent être identiques ou différents,
- A² représente un groupe alcoxy -OR où R représente un groupe alkyle comportant de 1 à 8 atomes de carbone, un groupe dialkylamino -NR₂ où R représente un groupe alkyle comportant de 1 à 8 atomes de carbone, ou un atome d'halogène choisi parmi chlore, brome et iode,
- l'indice y peut valoir 1, 2 ou 3, et la somme y+z vaut 3,
- l'indice b est égal à la valence de M¹,
- et l'indice n vaut 1 et correspond à la valence du métal M.

3. Procédé conforme à la revendication 1 ou 2, **caractérisé en ce que** le métal M est choisi parmi Li, Na, K, Rb et Cs, mais est de préférence Li.

4. Procédé conforme à la revendication 1 ou 2, **caractérisé en ce que** l'alpha-oléfine est choisie dans l'ensemble constitué par les éthène, 1-propène, 1-butène, 1-pentène, 1-hexène, 1-heptène, 1-octène et 1-décène.

5. Procédé conforme à l'une ou plusieurs des revendications 1 à 4, **caractérisé en ce que** le rapport molaire entre l' alkyl-méthyl-éther et le métal M ou l'hydrure de métal MHₙ vaut d'au moins 0,1/1 à 30/1, et de préférence de 0,2/1 à 20/1.

6. Procédé conforme à l'une ou plusieurs des revendications 1 à 5, **caractérisé en ce que** l'hydrure de métal réactif MHₙ^{∗} est utilisé dans un état finement divisé, où il présente une taille moyenne de particules D₅₀ de 0,01 à 100 µm,

7. Procédé conforme à l'une ou plusieurs des revendications 1 à 6, **caractérisé en ce que** le métal M² est de l'aluminium.

8. Procédé conforme à l'une ou plusieurs des revendications 1 à 6, **caractérisé en ce que** le composé de formule M¹ₓ[M²(A¹_{y}A²_{z})₃₊ₓ]_{b} utilisé est choisi dans l'ensemble constitué par les hydrures complexes d'aluminium, les hydrures d'alkyl-aluminium, les composés alkyl-aluminium, le chlorure d'aluminium et les alumino-halogénures de métal.

9. Procédé conforme à la revendication 8, **caractérisé en ce que** l'on utilise un hydrure complexe d'aluminium choisi dans l'ensemble formé par LiAlH₄, NaAlH₄ et Na[H₂AlEt₂], ou de l'hydrure de diiso-butyl-aluminium ou du AlH₃ en tant qu'hydrure d'aluminium, ou un composé alkyl-aluminium choisi dans l'ensemble formé par MeₛAl, Et₃Al et Bu₃Al, du chlorure d'aluminium, ou un alumino-halogénure de métal choisi dans l'ensemble formé par LiAlCl₄ et NaAlCl₄.

10. Procédé conforme à l'une ou plusieurs des revendications 1 à 6, **caractérisé en ce que** le composé de formule M¹ₓ[M²(A¹_{y}A²_{z})₃₊ₓ]_{b} est utilisé en quantité stœchiométrique, ou bien en quantité au moins catalytique en présence d'une source d'hydrogène, étant entendu que le rapport molaire du catalyseur au métal M ou à l'hydrure MHₙ vaut au moins 0,0001/1 et au plus 0,5/1, de préférence d'au moins 0,001/1 à 0,3/1, et mieux encore de 0,005/1 à 0,2/1.

11. Procédé conforme à l'une ou plusieurs des revendications 1 à 6, **caractérisé en ce que** la formation *in situ* de l'hydrure de métal MHₙ^{∗} a lieu à une température valant de -20 à 150 °C, de préférence de 0 à 100 °C, et mieux encore, située entre 25 et 70 °C.

12. Procédé conforme à l'une ou plusieurs des revendications 1 à 6, **caractérisé en ce que** la formation de l'hydrure MHₙ^{∗} a lieu de préférence sous atmosphère d'hydrogène, sous une pression située dans l'intervalle allant de 1 à 300 bars, et mieux encore, de 10 à 100 bars.

13. Compositions organo-métalliques obtenues conformément à l'une ou plusieurs des revendications 1 à 12, contenant des composés organo-métalliques RMₙ d'éléments alcalins, où l'indice n indique la valence du métal M et R représente un groupe alkyle comportant de 2 à 18 atomes de carbone, ainsi que, par rapport à la teneur en RMₙ, une fraction d'au moins 0,001 à au plus 20 % en moles, de préférence de 0,001 à au plus 5 % en moles, et mieux encore de 0,001 à au plus 1 % en moles, d'alkyl-méthyl-éther et/ou de méthylate de lithium.

14. Compositions organo-métalliques obtenues conformément à l'une ou plusieurs des revendications 1 à 12, contenant des composés organo-métalliques RMₙ d'éléments alcalins, où l'indice n indique la valence du métal M et R représente un groupe alkyle comportant de 2 à 18 atomes de carbone, ainsi que, par rapport à la teneur en RMₙ, une fraction d'au moins 0,001 à au plus 20 % en moles, de préférence de 0,001 à au plus 5 % en moles, et mieux encore de 0,001 à au plus 1 % en moles, de diméthyl-éther et/ou de méthylate de lithium, et jusqu'à 95 % en poids d'un solvant hydrocarbure.
